# EUROPEAN PATENT SPECIFICATION

(11) **EP 4 472 454 B1**
(45) Date of publication and mention of the grant of the patent: **08.04.2026**
(21) Application number: 23702025.0
(22) Date of filing: 30.01.2023
(51) Int. Cl.: A24F 40/53, A24F 40/10

(54) **SMOKING DEVICE WITH CONSUMABLE TEMPERATURE SENSING MEANS**
RAUCHVORRICHTUNG MIT TEMPERATURERFASSUNGSMITTELN VON EINEM VERBRAUCHSMATERIAL
DISPOSITIF À FUMER DOTÉ D'UN MOYEN DE DÉTECTION DE TEMPÉRATURE D'UN CONSOMMABLE

(30) Priority: 31.01.2022 EP 22154295
(43) Date of publication of application: 11.12.2024
(73) Proprietor: Philip Morris Products S.A., 2000 Neuchâtel (CH)
(72) Inventor: CHATEAU, Maxime, 2000 Neuchâtel (CH)
(74) Representative: Reddie & Grose LLP
(86) International application number: PCT/EP2023/052189
(87) International publication number: WO 2023/144389

(56) References cited:
- WO-A1-2017/024477
- US-A1- 2020 245 686
- US-A1- 2021 007 410
- US-A1- 2022 015 447

## Description

The present disclosure relates to an aerosol-generating device for generating an aerosol from an aerosol-generating article. The present disclosure also relates to a method of controlling a heater assembly of an aerosol-generating device.

Aerosol-generating devices configured to generate an aerosol from an aerosol-forming substrate, such as a tobacco-containing substrate, are known in the art. Such devices typically generate aerosol from the substrate through the application of heat to the substrate, rather than combustion of the substrate. In use, the aerosol-generating device may receive the aerosol-forming substrate, for example in a cavity or cavity of the device. The device may provide power to a heater assembly to generate heat, the heat being transferred to the aerosol-forming substrate to release volatile compounds which condense to form an aerosol. The heating may be a result of resistive heating of a heater element of the aerosol-generating device that is in thermal contact with the aerosol-forming substrate or inductive heating of a susceptor element of the aerosol-generating device or aerosol-generating article, the susceptor element being in thermal contact with the aerosol-forming substrate.

WO 2017/024477 A1 discloses a an electronic cigarette and method for detecting whether the electronic cigarette smoke has depleted. The electronic cigarette comprises a control circuit for detecting the change detection signal inches smoking, controlling the power supply circuit supplying power to the heating wire, and access to the rate of change of the temperature of the heating wire and the speed is greater than the pre-set value, determining the best electronic cigarette in cigarette consumption, and stopping power to the heating wire.

US 2021/007410 A1 discloses an aerosol generating device and a heating method to heat an aerosol-generating article. The aerosol generation device includes an electric heating element and a control unit configured to control the electric heating element itself or power that is supplied to the electric heating element. The control unit is configured to acquire the temperature of the load and a degree of progress of the use phase, to execute feedback control so that the temperature of the load converges to a predetermined temperature.

Typically, the aerosol-generating device is reusable and the aerosol-forming substrate is contained in a disposable aerosol-generating article. In use, the aerosol-generating article is heated by the aerosol-generating device to generate an aerosol. After a period of use, for example a predetermined number of puffs of the aerosol-generating article, the aerosol-forming substrate will become depleted. Once the aerosol-forming substrate has become depleted, the aerosol-generating article should be replaced with a fresh aerosol-generating article before subsequent usage of the aerosol-generating device.

There is a risk that a user may attempt to use a depleted aerosol-forming substrate with the aerosol-generating device, either intentionally or accidentally. This would be undesirable. For example, when a depleted aerosol-forming substrate is heated, an unsatisfactory aerosol may be generated, either or both in terms of the quantity and the chemistry of the aerosol.

Some aerosol-generating devices are configured to perform two sequential usage sessions. Such aerosol-generating devices can be configured to perform a second usage session immediately following the end of a first usage session. The aerosol-forming substrate may be depleted after a single usage session. In such cases, the aerosol-generating article should be replaced between a first usage session and a second, sequential, usage session. The risk of a user attempting to re-use a depleted aerosol-forming substrate may be a particular problem in the context of such devices.

It would be desirable to provide an aerosol-generating device that is capable of detecting when a depleted aerosol-generating article is used with the aerosol-generating device. It would be particularly desirable to provide an aerosol-generating device that is capable of detecting when a depleted aerosol-generating article is used with the aerosol-generating device in the immediate aftermath of an earlier usage session involving one or both of the aerosol-generating device and the aerosol-generating article.

According to a first aspect there is provided an aerosol-generating device for generating an aerosol from an aerosol-generating article according to independent claim 1.

The high power mode, in which aerosol can be generated, may advantageously be a mode in which the controller is configured to operate the power supply during a main usage phase of the aerosol-generating device, in which aerosol is generated to be inhaled by a user of the device.

During the high power mode, the controller may be configured to control the power supply to supply power to the heater assembly according to a predetermined heating profile. The predetermined heating profile may comprise heating the heater assembly or aerosol-generating article to one or more target temperatures throughout the progression of a usage session. Throughout the predetermined heating profile, the heater assembly may be configured to generate suitable quantities of aerosol from the aerosol-generating article for a user to inhale during a usage session.

The predetermined criterion may advantageously relate to an expected rate of change of the temperature of the heater assembly or aerosol-generating article when a fresh aerosol-generating article is received in the cavity of the aerosol-generating device. The controller may be configured to determine that a fresh aerosol-generating article is received in the cavity if the predetermined criterion is satisfied. The controller may be configured to determine that a depleted aerosol-generating article is received in the cavity if the predetermined criterion is not satisfied.

By switching from the low power mode to the higher power mode only if the measured parameter (relating to a rate of change of temperature) satisfies a predetermined criterion, the probability of the aerosol-generating device being used in the high power with a depleted aerosol-generating article may be reduced. The controller may advantageously not switch to the high power mode if a depleted aerosol-generating article is received in the cavity. Thus, the controller may advantageously prevent main phase usage of the aerosol-generating device if a depleted aerosol-generating article is detected. This may advantageously prevent a user from re-using a depleted aerosol-generating article and so minimize the risk of an satisfactory aerosol being generated during a usage session.

The controller being configured to determine the presence of a depleted aerosol-generating article while the power supply is configured to operate in a low power mode may advantageously mean that a fresh or depleted aerosol-generating article may be detected by the controller with minimal power usage. This is particularly advantageous when the power supply comprises a battery, for example.

Furthermore, as described below, the detection of a fresh or depleted aerosol-generating article using the predetermined criterion may rely on deviations in the initial temperature of the heater assembly or aerosol-generating article from an expected value and the subsequent transfer of heat between the two components. As such, it may be advantageous for the parameter related to rate of change of temperature to be measured in a low power mode in which the aerosol-generating article and the heater assembly are not substantially heated. The control routine may not work effectively if it is performed while the power supply is configured to operate in the high power mode.

The controller may be configured to switch from the low power mode to an error mode if the measured parameter does not satisfy the predetermined criterion. As above, if the measured parameter does not satisfy the predetermined criterion, it may be determined that a depleted aerosol-generating article is received in the cavity.

In the error mode, the controller may be configured to indicate to a user of the aerosol-generating device that a depleted aerosol-generating article is received in the cavity. For example, the aerosol-generating device may comprise a user interface or an indicator such as a light. The controller may be configured to control the user interface or indicator to show that a depleted aerosol-generating article is received in the cavity.

In the error mode, the controller may be configured to prevent the supply of power to the heater assembly.

As used herein, an aerosol-generating article that has not previously been heated and where the aerosol-generating substrate has not been depleted may be referred to as a "fresh" aerosol-generating article.

As used herein, an aerosol-generating article that has been used previously may be referred to as a "depleted" aerosol-generating article. The aerosol-generating article may be configured to be used for a predetermined number of puffs before being depleted, for example four, five, six, seven, eight, nine or ten puffs. The aerosol-generating article may be referred to as depleted when the aerosol-generating article has been used with an aerosol-generating device for the predetermined number of puffs.

During use of an aerosol-generating article, the article may be heated by the aerosol-generating device. The aerosol-generating device may be configured to heat the aerosol-generating article when the controller is configured to operate the power supply in the high power mode.

A depleted aerosol-generating article may have a temperature substantially above ambient temperature. This is because, unlike a fresh aerosol-generating article, a depleted aerosol-generating article will have previously been heated. The shorter the time elapsed since the aerosol-generating article was last used, the higher the temperature of the aerosol-generating article may be above ambient temperature.

A fresh aerosol-generating article may have a temperature that is substantially equal to ambient temperature when the aerosol-generating article is first received in the cavity of the aerosol-generating device. The temperature of a fresh aerosol-generating article may be slightly above ambient temperature, for example as a result of a user handling the aerosol-generating article before the aerosol-generating article is first received in the cavity. However, the temperature of the aerosol-generating article, and particularly an aerosol-forming substrate of the aerosol-generating article, may be no more than a first temperature or no more than ambient temperature if ambient temperature is greater than the first temperature. The first temperature may be between 25 and 40 degrees Celsius. The first temperature may be between 30 and 35 degrees Celsius. The first temperature may be no more than 40 degrees Celsius.

A fresh aerosol-generating article may have a temperature that is less than a depleted aerosol-generating article immediately after use of the depleted aerosol-generating article.

In some embodiments, the aerosol-generating article may comprise a susceptor element. In that case, references to the temperature of the aerosol-generating article may correspond to the temperature of the susceptor element.

The heater assembly of the aerosol-generating device may comprise a heater element such as a resistive heater element or a susceptor element. The heater element may be configured to heat the aerosol-generating article received in the cavity when the controller is configured to control the power supply in the high power mode. The temperature of the heater assembly, and in particular the heater element of the heater assembly, after power has been supplied in the high power mode may be substantially above ambient temperature. The shorter the time elapsed since the aerosol-generating device was last used in the high power mode, the higher the temperature of the heater assembly may be above ambient temperature.

If the heater assembly has not recently been used in the high power mode then the temperature of the heater assembly may be substantially equal to ambient temperature.

Given the differences in temperature between a fresh and a depleted aerosol-generating article, and a heater assembly that has recently been used and has not been recently used, the rate of change of the temperature of the aerosol-generating article or heater assembly may be different from the expected rate of change of temperature if a depleted aerosol-generating article is received in the cavity instead of a fresh aerosol-generating article. Therefore, whether or not the measured parameter (which may relate to a rate of change of a temperature of the heater assembly or a rate of change of the temperature of aerosol-generating article) satisfies the predetermined criterion may advantageously be used to detect whether a fresh aerosol-generating article is received in the cavity.

The predetermined criterion may comprise a comparison of the magnitude of the measured parameter with a predetermined threshold.

In one example, the predetermined criterion may relate to an expected rate of change of the temperature of the heater assembly or aerosol-generating article when a fresh aerosol-generating article is received in the cavity of an aerosol-generating device.

When the heater assembly comprises a heater element, the predetermined criterion may relate to an expected rate of change of the temperature of the heater assembly or aerosol-generating article when a fresh aerosol-generating article is received in the cavity of an aerosol-generating device when the heater assembly has not recently be used in the high power mode.

The predetermined criterion may comprise the magnitude of the measured parameter being less than a first predetermined threshold and preferably substantially equal to zero.

The first predetermined threshold may be a value for the measured parameter that corresponds to a rate of change of the temperature of the aerosol-generating article or heater assembly that is less than 1 degree Celsius per second, preferably less than 0.5 degrees Celsius per second, even more preferably less than 0.25 degrees Celsius per second. Preferably, the first predetermined threshold may be the magnitude of the measured parameter.

In this example, the first predetermined threshold may correspond to the maximum rate of change of temperature above which a depleted aerosol-generating article may be detected. The first predetermined threshold may advantageously be low in this example as the expected rate of change of temperature of the aerosol-generating article or heater assembly should be close to zero. This may be because a fresh aerosol-generating article has a temperature substantially equal to ambient and temperature. This may also be because the heater assembly may have substantially the same temperature as the aerosol-generating article.

However, selecting a value for the predetermined threshold that is slightly above zero may advantageously account for any unintentional heating of the aerosol-generating article before it is inserted in to the cavity, for example as a result of handling the aerosol-generating article.

The predetermined criterion may not be satisfied if the magnitude of the measured parameter is greater than the predetermined threshold. The magnitude of the measured parameter being greater than the predetermined threshold may advantageously indicate that a depleted aerosol-generating article is inserted into the heater assembly instead of a fresh aerosol-generating article.

A depleted aerosol-generating article may have a temperature that is greater than ambient temperature. So, the rate of change of temperature of a depleted aerosol-generating article may be greater than the rate of change of temperature of a fresh aerosol-generating article in this example. Furthermore, a depleted aerosol-generating article may have a heating effect on the heater assembly. So, the rate of change of the temperature of the heater assembly may be positive.

The heater assembly may have a cooling effect on the aerosol-generating article. The air surrounding the article, at ambient temperature may also have a cooling effect on the aerosol-generating article. So, the rate of change of the temperature of the aerosol-generating article may be negative.

As such, the magnitude of the rate of change of the temperature of the aerosol-generating article or the heater assembly may be greater than the predetermined threshold. The predetermined criterion may, therefore, not be satisfied and the presence of a depleted aerosol-generating article may be detected.

The predetermined criterion may not be satisfied if the magnitude of the measured parameter is greater than the predetermined threshold; and at least one of:
the measured parameter being indicative of the rate of change of the temperature of the heater assembly is positive; or
the measured parameter being indicative of the rate of change of the temperature of the aerosol-generating article is negative.

In another example, the predetermined criterion may relate to an expected rate of change of the temperature of the heater assembly or aerosol-generating article when a fresh aerosol-generating article is received in the cavity of an aerosol-generating device that has recently been used in the high power mode. This may only be the case if the heater assembly itself comprises a heater element.

The predetermined criterion may comprise the magnitude of the measured parameter being greater than a second predetermined threshold. The second predetermined threshold may be a value for the measured parameter that corresponds to a rate of change of the temperature of the aerosol-generating article or assembly that is greater than 3 degrees Celsius per second, preferably greater than 5 degrees Celsius per second, preferable greater than 7 degrees Celsius per second, even more preferably greater than 9 degrees Celsius per second.

A fresh aerosol-generating article may have a substantially different temperature to the heater assembly that has recently been used in the high power mode. So there may be a temperature difference between the two components.

The heater assembly may be above ambient temperature. The heater assembly may have a temperature substantially higher than the temperature of a fresh aerosol-generating article. Thus, a fresh aerosol-aerosol generating article received in the cavity of the aerosol-generating device may have a cooling effect on the heater assembly. The heater assembly may have a heating effect on the fresh aerosol-generating article.

The predetermined criterion may not be satisfied if the magnitude of the measured parameter is less than the second predetermined threshold. The predetermined criterion may not be satisfied if a depleted aerosol-generating article is instead inserted into the heater assembly.

If a depleted aerosol-generating article is received into the cavity instead of a fresh aerosol-generating article, the initial temperature of the aerosol-generating article may be closer to the temperature of the heater assembly than if a fresh aerosol-generating is received in the cavity. The cooling effect of the depleted aerosol-generating article on the heater assembly may be less than for a fresh aerosol-generating article. The heating effect of the heater assembly on the aerosol-generating article may be less than for a fresh aerosol-generating article. Thus, the rate of change of the temperature of the aerosol-generating article may not exceed the second predetermined threshold. The predetermined criterion may, therefore, not be satisfied and the presence of a depleted aerosol-generating article may be detected.

The predetermined criterion may not be satisfied if the magnitude of the measured parameter is less than the second predetermined threshold; and the measured parameter is indicative of the rate of change of the temperature of the heater assembly being negative.

When the aerosol-generating device comprises a heater element, the controller may be configured to select the predetermined criterion based on an initial temperature of the heater element. Preferably, the controller may be configured to select the predetermined threshold used in the predetermined criterion based on the initial temperature of the heater element. Preferably, the controller may be configured to select whether the predetermined criterion comprises the magnitude of the measured parameter being greater than, less than, or equal to a predetermined threshold based on the initial temperature of the heater element.

For example, both the first and second predetermined threshold described above may be stored in a memory of the controller. The controller may be configured to select either the first or the second predetermined threshold based on the initial temperature of the heater element.

Basing the predetermined criterion on the initial temperature of the heater element advantageously allows the controller to select the predetermined criterion based on whether the heater assembly has recently been used. This is because the initial temperature of the heater element will be higher if it has recently been used than if it has not been recently used. The controller may advantageously select an appropriate predetermined criterion depending on whether the heater assembly has recently been used. Preferably, the controller may advantageously be able to select to operate according to either of the examples described previously; one example described in relation to the first predetermined threshold, the other example described in relation to the second predetermined threshold.

The controller may be configured to select the first predetermined threshold if the determined initial temperature of the heater element is less than or equal to a threshold temperature. The controller may be configured to select a predetermined criterion comprising magnitude of the measured parameter being less than a first predetermined threshold and preferably substantially equal to zero if the determined initial temperature of the heater element is less than or equal to the threshold temperature.

The controller may be configured to select the second predetermined threshold if the determined initial temperature of the heater element is greater than the threshold temperature. The controller may be configured to select a predetermined criterion comprising the magnitude of the measured parameter being greater than the second predetermined threshold if the determined initial temperature of the heater element is greater than the threshold temperature.

The controller may be configured to determine the initial temperature of the heater element, or a parameter related to the initial temperature of the heater element. The controller may be configured to determine the initial temperature of the heater element, or a parameter related to the initial temperature of the heater element when the power supply is configured to operate in the low power mode. The controller may be configured to determine the initial temperature of the heater element, or a parameter related to the initial temperature of the heater element at the start of operating the power supply in the low power mode.

The parameter related to the initial temperature of the heater element determined by the controller may be the resistance or the conductance of the heater element.

The threshold temperature may be a temperature between about 15 degrees Celsius and about 60 degrees Celsius, preferably between about 20 degrees Celsius and 50 degree Celsius.

The threshold temperature may be a predetermined value stored in a memory of the controller. Alternatively, the threshold temperature may be derived from a measurement of ambient temperature made using a temperature senor of the aerosol-generating device.

When the controller is configured to determine a parameter related to the initial temperature of the heater element, rather than the initial temperature itself, the controller may be configured to select the predetermined criterion based on a threshold for that parameter that is equivalent to the threshold temperature. The controller may be configured to select the predetermined criterion based on a comparison of the initial value for the parameter related to the temperature of the heater element with a threshold for that parameter.

For example, a threshold may be a resistance threshold. The value of the resistance threshold may correspond to the temperature of the heater element being between about 15 degrees Celsius and about 60 degrees Celsius, preferably between about 20 degrees Celsius and 50 degree Celsius. The value for the resistance threshold may be stored in a memory of the controller.

The controller may be configured to control the power supply to operate the heater assembly in the low power mode for a predetermined time following activation of the device or following detection of an aerosol-generating article received in the device. The longer the power supply is operated in the low power mode before being operated in the high power mode, the longer the delay between the start of a usage session of the device and aerosol being generated. It may be advantageous for that delay to be short.

It has been found that the predetermined time may advantageously be relatively short with the rate of change of temperature of the aerosol-generating article or heater assembly still being determined accurately. Preferably, the predetermined time may be less than 3 seconds, preferably less than 2 seconds and most preferably about 1 second.

The predetermined time may start with the beginning of a usage session of the device. The predetermined criterion may comprise the time elapsed while operating in the low power mode being equal to or exceeding the predetermined time. As such, the controller may be configured to only switch from the low power mode only after the predetermined time has elapsed.

In the low power mode, the controller may be configured to measure the parameter related to a rate of change of a temperature of the heater assembly or a rate of change of a temperature of the aerosol-generating article received in the cavity by passing a current through the heater assembly and measuring a corresponding electrical parameter which indirectly relates to the temperature of the heater assembly or aerosol-generating article. By measuring the electrical parameter, the controller may advantageously be configured to indirectly determine a rate of change of the temperature of the heater assembly or aerosol-generating article. This is described in more detail below.

It may be advantageous to measure an electrical parameter that indirectly relates to the temperature of the heater assembly or aerosol-generating article, rather than measuring the temperature directly, because this removes the need for a dedicated temperature sensor.

Although the controller may be configured to control the power supply to pass a current through the heater assembly in the low power mode, the actual power supplied to the heater assembly may advantageously be relatively low. The controller may be configured to supply enough power to the heater assembly to measure the electrical parameter without causing substantial heating of the heater assembly.

The controller may be configured to repeatedly measure the electrical parameter. The rate of change of the electrical parameter may relate to the rate of change of the temperature of the heater assembly or aerosol-generating article. The controller may be configured to determine the rate of change of the electrical parameter by repeatedly measuring the electrical parameter at different time intervals and then calculating the rate of change of the electrical parameter between those time intervals. The time interval between successive measurements may be between 50 milliseconds and 1 second, preferably between 100 milliseconds and 500 milliseconds, even more preferably between 200 milliseconds and 300 milliseconds, most preferably about 250 milliseconds.

In the low power mode, the controller may configured to control the power supply to supply a current with a duty cycle of less than 2 %, preferably less than 1 %, preferably less than 0.5 %, preferably less than 0.4 %, preferably less than 0.2 %, preferably less than 0.15%, even more preferably less than 0.1 %. Such duty cycle values may advantageously allow for electrical parameters related to the heater assembly to be measured without causing substantial heating of the heater assembly.

In the low power mode, the controller may be configured to supply power to the heater assembly in a plurality of pulses. Successive pulses may be separated by time intervals. The length of each pulse may be less than the length of the time interval between successive pulses. The length of each pulse may be significantly less than the length of the time interval between successive pulses. Between pulses, the power may be interrupted. By using relatively short power pulses, with relatively large intervals between the pulses, significant heating of the heater assembly and the aerosol-generating article received in the cavity may be avoided in the lower power mode. The temperature of the heater assembly or aerosol-generating article may be indirectly determined during each pulse.

The length of each pulse may be between 0.1 milliseconds and 50 milliseconds, preferably between about 0.5 milliseconds and 10 milliseconds, even more preferably about 1 millisecond.

The length of the interval between successive pulses may be between 25 milliseconds and 500 milliseconds, preferably between 50 milliseconds and 300 milliseconds, even more preferably about 250 milliseconds.

The term 'interrupt' is used herein to cover embodiments in which the supply of power from the power supply is stopped or reduced such that effectively no power is supplied to the heater assembly.

The term 'successive' is used herein to refer to consecutive, adjacent or neighbouring values in a series or sequence.

The controller may be configured to measure the parameter related to a rate of change of a temperature of the heater assembly or a rate of change of a temperature of the aerosol-generating article received in the cavity during at least some of the plurality of pulses.

During the plurality of pulses, the controller may be configured to measure the electrical parameter by measuring the current supplied from the power supply during each pulse. The electrical parameter may be conductance or resistance.

The heater assembly may be an inductive heater assembly.

The heater assembly may comprise an inductor coil. The inductor coil may be positioned around or adjacent to the cavity of the aerosol-generating device.

The inductor coil may have the form of helical coil. The helical inductor coil may surround the cavity.

The inductor coil may have the form of a flat spiral coil. The flat spiral coil may be positioned adjacent to the cavity.

The heater assembly may comprise a plurality of inductor coils. A first inductor coil may be positioned on a first side of the cavity. A second inductor coil may be positioned on a second side of the cavity opposite the first side.

The aerosol-generating device may be for use with an aerosol-generating article comprising a susceptor element.

Alternatively, the aerosol-generating device may comprise the susceptor element. A susceptor element of the device may surround the cavity for receiving the aerosol-generating article. Alternatively, the susceptor element may be positioned within the cavity.

A susceptor element positioned within the cavity may be elongate. The susceptor element may extend along a longitudinal axis parallel to a longitudinal axis of the cavity. The susceptor element may be configured to penetrate an aerosol-forming substrate of an aerosol-generating article received in the cavity. The susceptor element may have the form of a blade, a pin or a rod.

Irrespective of whether the aerosol-generating device or the aerosol-generating article comprises the susceptor element, the power supply may be configured to provide an oscillating current to the inductor coil. The oscillating current may be a high frequency oscillating current. As used herein, the term "high frequency" is used to describe a frequency ranging from about 1 Megahertz (MHz) to about 30 Megahertz (MHz), from about 1 Megahertz (MHz) to about 10 MHz (including the range of about 1 MHz to about 10 MHz), and from about 5 Megahertz (MHz) to about 7 Megahertz (MHz) (including the range of about 5 MHz to about 7 MHz). This may generate a varying magnetic field. The susceptor element of an aerosol-generating article received in the cavity may interact with the varying magnetic field such that a varying current is induced in the susceptor element. This may generate heat.

In the low power mode, the controller may be configured to supply the oscillating current such that a relatively low power is supplied to the susceptor element. In this way, minimal heat may be generated by the susceptor element of the aerosol-generating article and an aerosol may not be generated.

In the high power mode, the controller may be configured to supply the oscillating current such that a relatively high power is supplied to the susceptor element. In this way, enough heat may be generated by the susceptor element of the aerosol-generating article to generate an aerosol. In particular, the heat generated in the susceptor element may be transferred, for example by conduction, to an aerosol-forming substrate of the aerosol-generating article to generate an aerosol.

When the controller is configured to supply power to the heater assembly in a plurality of pulses, the oscillating current may be supplied only during each pulse.

The power supply may comprise a DC power supply such as a battery. When the heater assembly is an inductive heater assembly, the aerosol-generating device may further comprise a DC/AC converter connected to the DC power supply. The DC/AC converter may comprise a power amplifier. In particular, the DC/AC converter may comprise a Class-E power amplifier comprising a transistor switch and a transistor switch driver circuit. Class-E power amplifiers are generally known and are described in detail, for example, in the article "Class-E RF Power Amplifiers", Nathan 0. Sokal, published in the bimonthly magazine QEX, edition January/February 2001, pages 9-20, of the American Radio Relay League (ARRL), Newington, CT, U.S.A.. Class-E power amplifiers may advantageously operate at high frequencies, while also having a relatively simple circuit structure comprising a small number of components (e.g. Class-E power amplifiers require one transistor switch only, which is advantageous over Class-D power amplifiers, which require two transistor switches controlled at high frequency to ensure that when one of the two transistors is switched off, the other of the two transistors is switched on). In addition, Class-E power amplifiers are known to have low power dissipation across the switching transistor during switching transitions. The Class-E power amplifier may be a single-ended first order Class-E power amplifier having a single transistor switch only.

As above, the aerosol-generating device may be for receiving an aerosol-generating article comprising a susceptor element or the aerosol-generating device itself may comprise the susceptor element. The measured parameter may be the rate of change of the conductance of the susceptor element or the rate of change of the resistance of the susceptor element.

Preferably, the susceptor element comprises or consists of a material having a conductance that is temperature dependent. Therefore, the rate of change the conductance or resistance of the susceptor element may advantageously related to the rate of change of temperature of the susceptor element. Preferably, the measured parameter may be the rate of change of the conductance of the susceptor element. As conductance is the inverse of resistance, any reference to conductance below may be replaced with a corresponding statement about resistance.

The temperature dependence of the susceptor element may depend on the materials that form the susceptor element. Some susceptor elements have an S-shaped dependence relationship between conductance and temperature in which the conductance initially falls with increasing temperature. As the temperature continues to rise, the conductance may then begin to rise. As the temperature rises yet further, the conductance may then fall again.

When the measured parameter is conductance, the predetermined criterion may relate to an expected behaviour of the conductance when a fresh aerosol-generating article is received in the cavity.

The first predetermined threshold may be a maximum value for the rate of change of conductance of the susceptor element when a fresh aerosol-generating article is received in the cavity. The first predetermined threshold may represent a magnitude of the maximum rate of change of conductance of the susceptor element when a fresh aerosol-generating article is received in the cavity.

The predetermined criterion may comprise the rate of change of the conductance of the susceptor element being less than the first predetermined threshold. This may be the case, for example, if the predetermined criterion relates to an expected rate of change of the temperature of the susceptor element when a fresh aerosol-generating article is received in the cavity of an aerosol-generating device that has not recently been used. This may be because the temperature of a fresh aerosol-generating article should be similar to the temperature of the heater assembly and so there should be a very minimal heating or cooling of a fresh aerosol-generating article.

The predetermined criterion may not be satisfied if the measured rate of change of the conductance of the susceptor element is greater than the first predetermined threshold.

The predetermined criterion may not be satisfied if the rate of change of the conductance of the susceptor element is positive. This may be advantageous when the susceptor element has an inverse temperature and conductance relationship, at least in the temperature region between ambient temperature and the expected temperature of a recently depleted aerosol-generating article. This is because a positive rate of change of conductance may be indicative of such a susceptor element cooling down.

Preferably, the predetermined criterion may not be satisfied if the magnitude of the rate of change of the conductance of the susceptor is greater than the first predetermined threshold and the rate of change of the conductance is positive.

When the aerosol-generating article comprises the susceptor element, the controller being configured to measure the rate of change of conductance of the susceptor element comprises the controller measuring a parameter related to a rate of change of a temperature of an aerosol-generating article received in the cavity.

When the aerosol-generating device comprises the susceptor element, the controller being configured to measure the rate of change of conductance of the susceptor element comprises the controller measuring a parameter related to a rate of change of a temperature of the heater assembly.

When the aerosol-generating device comprises the susceptor element, the second predetermined threshold may be a minimum value for the rate of change of conductance of the susceptor element when a fresh aerosol-generating article is received in the cavity. This may be the case, for example, if the predetermined criterion relates to an expected rate of change of the temperature of the heater assembly when a fresh aerosol-generating article is received in the cavity of an aerosol-generating device that has recently been used. This may be because the temperature of a fresh aerosol-generating article may be lower, and preferably significantly lower, than the temperature of the heater assembly and so there should be a significant cooling effect of a fresh aerosol-generating article on the heater element.

The predetermined criterion may not be satisfied if the measured rate of change of the conductance of the susceptor element is less than the second predetermined threshold.

The controller may be configured to determine the rate of change of the conductance by repeatedly measuring the conductance value at different time intervals and then calculating the rate of change between those time intervals. The time interval between successive conductance values may be between 50 milliseconds and 1 second, preferably between 100 milliseconds and 500 milliseconds, even more preferably between 200 milliseconds and 300 milliseconds, most preferably about 250 milliseconds.

Preferably, the controller may be configured to determine a conductance value for the susceptor element based on the one or more measurements of current supplied from the power supply and the voltage across the power supply. When the controller is configured to supply power to the heater assembly in a plurality of pulses, the controller may determine a conductance value during at least some of the plurality of pulse.

A conductance value may be determined from the quotient or ratio of a current measurement and a voltage measurement. The controller may be configured to determine the quotient of one or more current measurements and one or more voltage measurements. In other words the controller may be configured to determine a conductance value by dividing one or more measurements of current by one or more measurements of voltage.

In one example, the voltage supplied to the inductive heating assembly from the power supply is constant. When the controller is configured to supply power to the heater assembly in a plurality of pulses, the supplied voltage being constant may mean that the voltage is constant throughout the duration of the pulse. The electrical conductance of the susceptor arrangement may be directly proportional to the supply current drawn by the inductive heating assembly. Thus, by determining a value indicative of the supply current drawn by the inductive heating arrangement in heating the susceptor arrangement, the controller may also determine a value indicative of the electrical conductance of the susceptor element. The same holds for the electrical apparent resistance of the susceptor element which is inversely proportional to the supply current drawn by the inductive heating assembly in heating the susceptor arrangement.

It will be appreciated that all references to measurement of current referred to herein may additionally include measurements of voltage. It will be appreciated that all references to measurement of current referred to herein may additionally include measurements of voltage and determinations of conductance.

The heater assembly may be a resistive heater assembly. The heater assembly may comprise a resistive heater element configured in use to heat the aerosol-generating article received in the cavity.

The resistive heater element may surround the cavity for receiving the aerosol-generating article.

Alternatively, the resistive heater element may be positioned within the cavity. The resistive heater element may be elongate. The resistive heater element may extend along a longitudinal axis parallel to a longitudinal axis of the cavity. The resistive heater element may be configured to penetrate an aerosol-forming substrate of an aerosol-generating article received in the cavity. The resistive heater element may have the form of a blade, a pin or a rod.

The power supply may comprise a DC power supply such as a battery.

In the low power mode, the controller may be configured to supply current to the resistive heater element such that a relatively low power is supplied to the resistive heater element. In this way, minimal heat may be generated by the resistive heater element and an aerosol may not be generated.

In the high power mode, the controller may be configured to supply current such that a relatively high power is supplied to the resistive heater element. In this way, enough heat may be generated by the resistive heater element to generate an aerosol. In particular, the heat generated in the resistive heater element may be transferred, for example by conduction, to an aerosol-forming substrate of the aerosol-generating article to generate an aerosol.

When the controller is configured to supply power to the heater assembly in a plurality of pulses, current may be supplied only during each pulse.

During the low power mode, the controller may be configured to measure a parameter related to a rate of change of a temperature of the heater assembly comprising the resistive heater element.

The measured parameter may be the resistance or conductance of the heater element, preferably the resistance.

Preferably, the resistive heater element comprises or consists of a material having a resistance that is temperature dependent. Therefore, the rate of change the resistance of the resistive heater element is advantageously related to the rate of change of temperature of the resistive heater element.

When the measured parameter is resistance of the heater element, the predetermined criterion may relate to an expected behaviour of the resistance when a fresh aerosol-generating article is received in the cavity.

In one example, the first predetermined threshold may be a maximum value for the rate of change of resistance of the resistive heater element when a fresh aerosol-generating article is received in the cavity. The predetermined criterion may comprise the magnitude of the rate of change of the resistance of the heater element being less than the first predetermined threshold. This may be the case, for example, if the predetermined criterion relates to an expected rate of change of the temperature of the heater assembly when a fresh aerosol-generating article is received in the cavity of an aerosol-generating device that has not recently been used. This may be because the temperature of a fresh aerosol-generating article should be similar to the temperature of the heater assembly and so there should be a minimal heating or cooling effect of a fresh aerosol-generating article on the heater element.

In one example, the second predetermined threshold may be a minimum value for the rate of change of resistance of the resistive heater element when a fresh aerosol-generating article is received in the cavity. The predetermined criterion may comprise the magnitude of the rate of change of the resistance of the heater element being greater than the second predetermined threshold. This may be the case, for example, if the predetermined criterion relates to an expected rate of change of the temperature of the heater assembly when a fresh aerosol-generating article is received in the cavity of an aerosol-generating device that has recently been used. This may be because the temperature of a fresh aerosol-generating article should be lower, and preferably significantly lower, than the temperature of the heater assembly and so there should be a significant cooling effect of a fresh aerosol-generating article on the heater element.

The resistive heating element preferably comprises an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, Constantan, nickel-, cobalt-, chromium-, aluminium- titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetal^{®}, iron-aluminium based alloys and iron-manganese-aluminium based alloys. Timetal^{®} is a registered trade mark of Titanium Metals Corporation. In composite materials, the electrically resistive material may optionally be embedded in, encapsulated or coated with an insulating material or vice-versa, depending on the kinetics of energy transfer and the external physicochemical properties required. The heating element may comprise a metallic etched foil insulated between two layers of an inert material. In that case, the inert material may comprise Kapton^{®}, all-polyimide or mica foil. Kapton^{®} is a registered trade mark of E.I. du Pont de Nemours and Company.

The controller may be a microprocessor, which may be a programmable microprocessor, a microcontroller, or an application specific integrated chip (ASIC) or other electronic control circuitry.

According to a second aspect there is provided an aerosol-generating system according to claim 13.

As used herein, the term 'aerosol-forming substrate' relates to a substrate capable of releasing volatile compounds that can form an aerosol. Such volatile compounds may be released by heating the aerosol-forming substrate. An aerosol-forming substrate may conveniently be part of an aerosol-generating article or smoking article.

The aerosol-forming substrate may be a solid aerosol-forming substrate. Alternatively, the aerosol-forming substrate may comprise both solid and liquid components. The aerosol-forming substrate may comprise a tobacco-containing material containing volatile tobacco flavour compounds which are released from the substrate upon heating. Alternatively, the aerosol-forming substrate may comprise a non-tobacco material. The aerosol-forming substrate may further comprise an aerosol former that facilitates the formation of a dense and stable aerosol. Examples of suitable aerosol formers are glycerine and propylene glycol.

In a particularly preferred embodiment, the aerosol-forming substrate comprises a gathered crimpled sheet of homogenised tobacco material. As used herein, the term 'crimped sheet' denotes a sheet having a plurality of substantially parallel ridges or corrugations.

The aerosol-generating system may comprise a cartridge containing an aerosol-forming substrate. The cartridge may be receivable in the cavity of the aerosol-generating device. The aerosol-forming substrate may be solid or liquid or comprise both solid and liquid components. Preferably, the aerosol-forming substrate is a liquid.

The aerosol-forming substrate may comprise plant-based material. The aerosol-forming substrate may comprise tobacco. The aerosol-forming substrate may comprise a tobacco-containing material containing volatile tobacco flavour compounds, which are released from the aerosol-forming substrate upon heating. Preferably, the aerosol-forming substrate may alternatively comprise a non-tobacco-containing material.

The aerosol-generating article may comprise a susceptor element. Alternatively, the heater assembly of the aerosol-generating device may comprise the susceptor element. This was described in reference to the first aspect, above.

As used herein, a "susceptor" or "susceptor element" means a conductive element that heats up when subjected to a changing magnetic field. This may be the result of eddy currents induced in the susceptor element or hysteresis losses (or both eddy currents induced in the susceptor element and hysteresis losses). Possible materials for the susceptor include graphite, molybdenum, silicon carbide, stainless steels, niobium, aluminium and virtually any other conductive elements. Advantageously the susceptor element is a ferrite element. The material and the geometry for the susceptor element can be chosen to provide a desired electrical resistance and heat generation. The susceptor element may comprise, for example, a mesh, flat spiral coil, fibres or a fabric. Advantageously, the susceptor is in contact with the first aerosol-forming substrate. The susceptor element may advantageously be fluid permeable.

The susceptor element may comprise a first susceptor material. The susceptor element may comprise a second susceptor material.

The first susceptor material may have a first Curie temperature. The second susceptor material may have a second Curie temperature. The second Curie temperature may be lower than the first Curie temperature.

Above its Curie temperature, a material is no longer ferromagnetic and so heating due to hysteresis losses no longer occurs. In the case the susceptor element is made from one single material, the Curie temperature may correspond to a maximum temperature the susceptor element should have (that is to say the Curie temperature is identical with the maximum temperature to which the susceptor element should be heated or deviates from this maximum temperature by about 1-3%). This reduces the possibility of rapid overheating.

If the susceptor element is made from more than one material, the materials of the susceptor element can be optimized with respect to further aspects. For example, the materials can be selected such that a first material of the susceptor element may have a Curie temperature which is above the maximum temperature to which the susceptor element should be heated. This first material of the susceptor element may then be optimized, for example, with respect to maximum heat generation and transfer to the aerosol-forming substrate to provide for an efficient heating of the susceptor on one hand. However, the susceptor element may then additionally comprise a second material having a Curie temperature which corresponds to the maximum temperature to which the susceptor should be heated, and once the susceptor element reaches this Curie temperature the magnetic properties of the susceptor element as a whole change. This change can be detected and communicated to the controller which then interrupts the supply of power to the heater assembly until the temperature of the susceptor element has cooled down below the Curie temperature again, whereupon the supply of power can be resumed.

The parameter measured by the controller may be the rate of change of the conductance of the susceptor element or the rate of change of the resistance of the susceptor element.

The heater assembly of the aerosol-generating device may comprise an inductor coil. The power supply may be configured to provide an oscillating current to the inductor coil. The inductor coil may be positioned within, around or adjacent to the cavity. The inductor coil may surround the aerosol-generating article when the aerosol-generating article is received in the cavity.

The aerosol-generating article may be in the shape of a rod. The aerosol-forming substrate may be at or towards a distal end of the rod. The proximal end of the rod may form or comprise a mouthpiece.

In a third aspect, there is provided a method of controlling a heater assembly of an aerosol-generating device according to independent claim 15.

The method may further comprise switching from the low power mode to an error mode if the measured parameter does not satisfy the predetermined criterion.

The predetermined criterion may comprise a comparison of the magnitude of the measured parameter with a predetermined threshold

The predetermined criterion may comprise the magnitude of the measured parameter being less than a first predetermined threshold and preferably substantially equal to zero.

The measured parameter may not satisfy the predetermined criterion if the magnitude of the measured parameter is greater than the first predetermined threshold.

The first predetermined threshold may be a value for the measured parameter that corresponds to a rate of change of the temperature of the aerosol-generating article or heater assembly that is less than 1 degree Celsius per second, preferably less than 0.5 degrees Celsius per second, even more preferably less than 0.25 degrees Celsius per second. Preferably, the first predetermined threshold may be the magnitude of the measured parameter.

The measured parameter may not satisfy the predetermined criterion if the magnitude of the measured parameter is greater than the first predetermined threshold; and the measured parameter is indicative of the rate of change of the temperature of the heater assembly being positive; or the measured parameter is indicative of the rate of change of the temperature of the heater assembly being negative.

The predetermined criterion may comprise the magnitude of the measured parameter being greater than a second predetermined threshold. The second predetermined threshold may be a value for the measured parameter that corresponds to a rate of change of the temperature of the aerosol-generating article or assembly that is greater than 3 degrees Celsius per second, preferably greater than 5 degrees Celsius per second, preferable greater than 7 degrees Celsius per second, even more preferably greater than 9 degrees Celsius per second.

The predetermined criterion may not be satisfied if the magnitude of the measured parameter is less than the second predetermined threshold.

The predetermined criterion may not be satisfied if the magnitude of the measured parameter is less than the second predetermined threshold. The measured parameter may be indicative of the rate of change of the temperature of the heater assembly being negative.

The method may further comprise activating the device or detecting that an aerosol-generating article has been received in the device.

The step of operating the heater assembly in the low power mode may occur immediately following the step of activating the device or detecting that an aerosol-generating article has been received in the device.

The heater assembly may be operated in the low power mode for a predetermined time.

The predetermined time may be less than 3 seconds, preferably less than 2 seconds, even more preferably about 1 second.

The method may further comprise switching from the low power mode only after a predetermined time has elapsed.

The method may further comprise controlling the power supply to supply a current with a duty cycle of less than 2 %, preferably less than 1 %, preferably less than 0.5 %, preferably less than 0.4 %, preferably less than 0.2 %, preferably less than 0.15 %, even more preferably less than 0.1 % while operating the heater assembly in the low power mode.

The method may further comprise supplying power to the heater assembly in a plurality of pulses. The plurality of pulses may be separated by time intervals. The length of each pulse may be less than the length of the time interval between successive pulses while operating the heater assembly in the low power mode.

The length of each pulse may be between 0.1 milliseconds and 50 milliseconds, preferably between about 0.5 milliseconds and 10 milliseconds, even more preferably about 1 millisecond.

The length of the interval between successive pulses may be between 25 milliseconds and 500 milliseconds, preferably between 50 milliseconds and 300 milliseconds, even more preferably about 250 milliseconds.

The method may further comprise measuring the parameter related to a rate of change of a temperature of the heater assembly or a rate of change of a temperature of the aerosol-generating article received in the cavity may be measured during at least some of the plurality of pulses.

The step of measuring the parameter during at least some of the plurality of pulses may comprise measuring the current supplied from the power supply during the respective pulse.

The heater assembly may comprise an inductor coil. The method may comprise supplying power to the inductor coil as an oscillating current.

The power may be supplied by a DC power supply such as a battery. The method may further comprise converting the power supplied by the DC power supply to an alternating current using a DC/AC converter connected to the DC power supply.

The aerosol-generating device may be for receiving an aerosol-generating article comprising a susceptor element. Alternatively, the aerosol-generating device may comprise a susceptor element. The measured parameter may be the rate of change of the conductance of the susceptor element or the rate of change of the resistance of the susceptor element.

The measured parameter may be the rate of change of the conductance of the susceptor element.

Features described in relation to one aspect, example or embodiment may also be applicable to other aspects, examples and embodiments. In particular, features of the testing apparatus of the first aspect may apply to the testing apparatus used in the method of the second and third aspects. Similarly, features described in relation to the method of the second aspect may also apply to the method of the third aspect and vice versa.

Examples will now be further described with reference to the figures in which:
Figure 1 is a schematic of a cross sectional view of a first aerosol-generating device;
Figure 2 is a flow diagram of a method performed by the controller of the aerosol-generating device of Figure 1;
Figure 3 is a graph showing how the conductance of a susceptor element of an aerosol-generating article receiving the in aerosol-generating device of Figure 1 changes in time if the aerosol-generating article is a fresh aerosol-generating article;
Figure 4 is a graph showing how the conductance of the susceptor element changes in time if the aerosol-generating article is a depleted aerosol-generating article;
Figure 5 is a schematic of a cross sectional view of a second aerosol-generating device;
Figure 6 is a flow diagram of a method performed by the controller of the aerosol-generating device of Figure 5;
Figure 7 is a graph showing how the resistance of the heater blade of the aerosol-generating device of Figure 5 changes in time if a fresh aerosol-generating article is received in the cavity of the aerosol-generating device and if the heater blade has not recently been used;
Figure 8 is a graph showing how the resistance of the heater blade change in time if a depleted aerosol-generating article is received in the cavity of the aerosol-generating device of Figure 5 and if the heater blade has not recently been used;
Figure 9 is a graph showing how the resistance of the heater blade of the aerosol-generating device of Figure 5 changes in time if a fresh aerosol-generating article is received in the cavity of the aerosol-generating device and if the heater blade has recently been used; and
Figure 10 is a graph showing how the resistance of the heater blade change in time if a depleted aerosol-generating article is received in the cavity of the aerosol-generating device of Figure 5 and if the heater blade has recently been used.

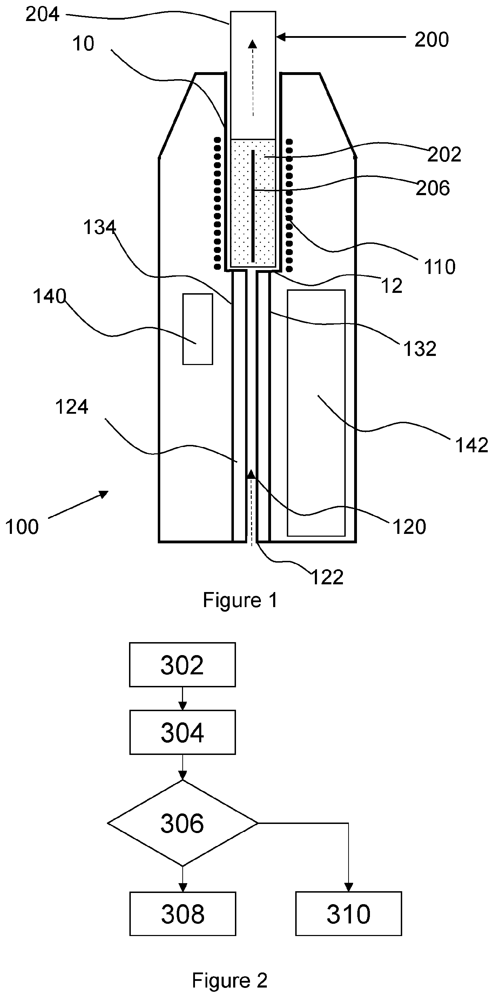

Figure 1 is a schematic of a cross sectional view of a first aerosol-generating device 100. The aerosol-generating device 100 comprises a cavity 10 defined by a device housing. The cavity 10 is tubular, made of a stainless steel and has at an upstream end a base 12. The cavity 10 is configured for receiving an aerosol-generating article 200.

An aerosol-generating article 200 is received in the cavity 10. The aerosol-generating article 200 contains an aerosol-forming substrate 202. The aerosol-forming substrate is a solid tobacco-containing substrate. In particular, the aerosol-forming substrate is a gathered sheet of homogenised tobacco. As shown in Figure 1, the aerosol-generating article and cavity are configured such that a mouth end of the aerosol-generating article 200 protrudes out of the cavity 10 and out of the aerosol-generating device when the aerosol-generating article is received in the cavity. This mouth end forms a mouthpiece 204 on which a user of the aerosol-generating device may puff in use.

The aerosol-generating article further comprises a susceptor element 206. The susceptor element 206 is formed of a sheet of electrically conductive material that is embedded within the aerosol-forming substrate 202. The susceptor element 206 is radially centrally located within the aerosol-forming substrate 202.

The aerosol-generating device 100 further comprises a heater assembly comprising an inductor coil 110. The inductor coil 110 is a helical coil that surrounds the cavity 10. When the aerosol-generating article 200 is received in the cavity 10, the susceptor element 206 is positioned such that it is surrounded by the inductor coil 110.

An aerosol-generating device 100 together with an aerosol-generating article 200 may be referred to as an aerosol-generating system.

An airflow channel 120 extends from an air inlet 122 of the aerosol-generating device 100. Upstream of the cavity, the airflow channel 120 is primarily defined by an airflow channel wall 124. Downstream of the airflow channel wall 124, the airflow channel 120 passes through an air inlet defined in the base 12 of the cavity. The airflow channel 120 then extends through the cavity 10.

The aerosol-generating device 100 further comprises a power supply 142 in form of a rechargeable battery. The power supply 142 is a DC power supply. The power supply is connected to the inductor coil 110 of the heater assembly via a DC/AC converter (not shown in the drawings) which converts the direct current of the power supply into a high frequency alternating current. This causes the inductor 110 to generate a fluctuating electromagnetic field within a distal portion of the cavity 10 of the device. When an aerosol-generating article 200 is correctly located in the cavity 10, the susceptor element 206 of the article 10 is located within this fluctuating electromagnetic field. The fluctuating field generates eddy currents within the susceptor element 206 which can result in heat being generated in the susceptor element 206. Heat can also be generated by magnetic hysteresis losses within the susceptor 14.

The power supply is controllable by a controller 140. The power supply is connected to the controller and the inductor coil 110 via electrical wires and connections that are not shown in the Figures. The aerosol-generating device may comprise further elements, not shown in the Figures, such as a button for activating the aerosol-generating device.

In use of the aerosol-generating device 100, a user will initially activate the device by pressing the button. Immediately following activation, the controller 140 is configured to perform the method shown in Figure 2.

At step 302 of the method, the controller is configured to begin supplying power to the inductor coil 110 of the heater assembly.

As described above, the power is supplied as a high frequency alternating current. In step 302, the controller is only configured to supply power to heater assembly so that the heater assembly operated in a low power mode. In the low power mode, substantial heating of the susceptor element 206 of the aerosol-generating article 200 is avoided. This is achieved by supplying power to the inductor coil 110 as a series of successive pulses separated by time intervals. The pulses have length of about 1 millisecond and are separated by time intervals of about 250 milliseconds. During the time intervals, the power supplied to the inductor coil 110 is interrupted. As such, a fluctuating field is only generated by the inductor coil 110 during the pulses and so heat is only generated in the susceptor element 206 during the pulses. As the pulses are much shorter than the intervals between pulses, the temperature of the susceptor element 206 will not substantially increase in the low power mode.

Step 304 is performed during step 302. Step 304 of the method comprises determining the rate of change of conductance of the susceptor element 206. The susceptor element 206 is made of a material having a conductance that is dependent on temperature. As such, determining the rate of change of the conductance of the susceptor element 206 provides a proxy for the rate of change of the temperature of the susceptor element 206.

During the pulses in the low power mode, the controller is configured to probe and measure the conductance of the susceptor element 206. The controller is configured to measure the conductance of the susceptor element 206 by measuring the voltage and current of the power supplied to the inductor coil 110. The electrical conductance of the susceptor element 206 is directly proportional to the supply of current drawn by the inductive heating assembly. Thus, by measuring the current drawn by the inductive heating arrangement, the controller can then also determine a value indicative of the electrical conductance of the susceptor element.

The controller is able to determine the rate of change of the conductance by comparing the difference in conductance value during successive pulses and dividing by the time separation between those measurements. In this embodiment, the controller is configured to determine the rate of change of conductance over a period of 2 seconds.

At step 306 of the method, the controller is configured to compare the determined rate of change of the conductance of the susceptor element 206 to a predetermined threshold stored in a memory of the controller. The predetermined threshold corresponds to a maximum expected rate of change of the conductance of the susceptor element 206 if a fresh aerosol-generating article 200 is received in the cavity 10.

The expected rate of change of the conductance of the susceptor element 206 of a fresh aerosol-generating article should be relatively low because the expected rate of change of the temperature of the susceptor element 206 should be low. This is because the initial temperature of the susceptor element 206 is expected to be at or close to ambient temperature. As such, the predetermined threshold corresponds to a rate of change of temperature of less than 0.25 degrees Celsius.

The rate of change of conductance of the susceptor element 206 will deviate from the expected rate if the susceptor element 206 has recently been heated. This is indicative of a depleted aerosol-generated article. The deviation is because the starting temperature of the susceptor element 206 of a depleted aerosol-generating article should be higher than ambient temperature and so a cooling of the susceptor element 206 will be measured as the aerosol-generating article cools in ambient conditions.

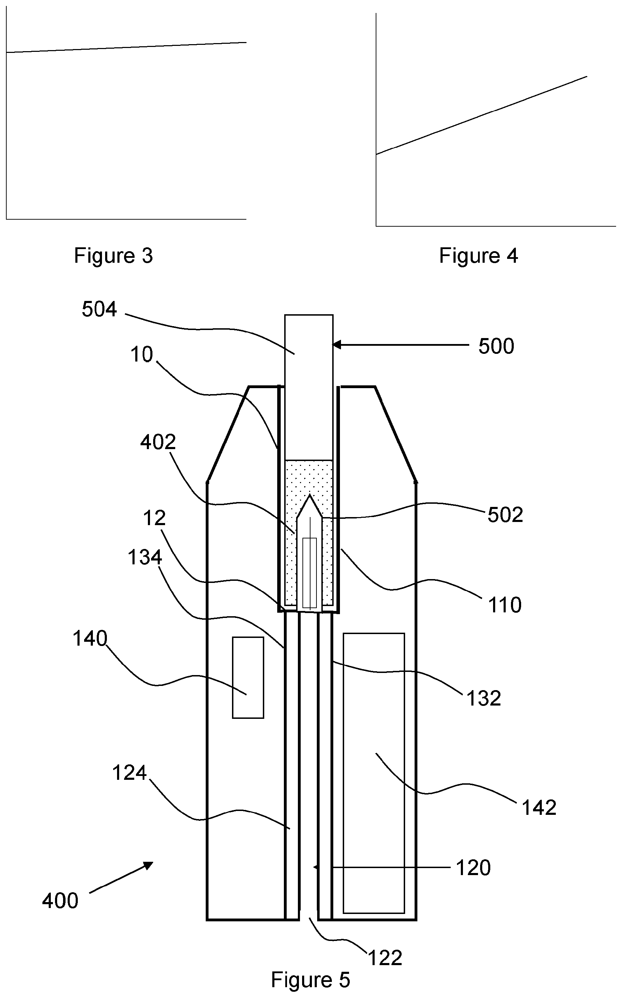

Figure 3 is a graph showing how the conductance of the susceptor element 206 of a fresh aerosol-generating article changes in time. Figure 4 shows a graph representing how the conductance of the susceptor element of a depleted aerosol-generating article changes in time. Both Figures 3 and 4 show time on the x axis and conductance on the y axis. The time is over a relatively short period of 2 seconds. Over this time period, the rate of change of the conductance can be approximated as linear, even if, over a longer period of time, the rate of change of the conductance is actually non-linear.

Comparing the graph of Figure 3 to Figure 4, it is clear that the slope of the graph is steeper when a depleted aerosol-generating article is received in the cavity 10.

The slope of the graph of Figure 3 has a non-zero gradient only because the temperature of the susceptor element 206 had a starting temperature slightly above ambient temperature as a result of a handling of the aerosol-generating article 200 by a user. The non-zero gradient corresponds to a slight cooling of the susceptor element 206 back towards ambient temperature. However, the non-zero gradient is less than the predetermined threshold.

If the controller determines that the magnitude of the rate of change of the conductance of the susceptor element 206 is less than or equal to the predetermined threshold, the controller is configured to carry out step 308 of the method.

Step 308 of the method comprises switching from the low power mode to a high power mode. In the high power mode, power is supplied to the inductor coil 110 such that significant heating of the susceptor element 206 occurs. The power may either be supplied constantly or, if the power is supplied in pulses, the length of the pulses are substantially longer than the interval between the pulse. In the high power mode, a user can puff on the aerosol-generating device to inhale an aerosol. The high power mode can be considered a normal usage phase of the device. In some embodiments, the aerosol-generating device comprises a user interface to indicate to a user that the device is ready for puffing.

During the high power mode, a user will puff on the mouthpiece 204 of the received aerosol-generating article 200 resulting in air being drawn through the airflow channel 120 towards the user's mouth. During a puff, air will be drawn from outside of the aerosol-generating device into the airflow channel 120 through air inlet 122. The air will be drawn through the portions of the airflow channel defined by the airflow channel wall 124, through the air inlet defined in the base 12 of the cavity 10 and into the cavity. Because the aerosol-generating article 200 is received in the cavity, the air drawn into the cavity with enter the aerosol-generating article 200 at its distal end. Thus, the air passes through the aerosol-forming substrate 202. In doing so, any volatile compounds generated by the heating of the substrate 202 will become entrained in the air. As the air continues towards the mouth end of the aerosol-generating article 200, the volatile compounds cool to form an aerosol. The direction of airflow through the aerosol-generating device, and the aerosol-generating article, is represented in Figure 1 by the dashed arrow.

If the controller determines that the magnitude of the rate of change of the conductance of the susceptor element 206 exceeds the predetermined threshold, the controller is configured to carry out step 310 of the method instead of step 308.

Step 310 comprises switching from the low power mode to an error mode. In the error mode, the controller is configured to prevent the supply of power to the heater assembly and so prevent a user from continuing to use the aerosol-generating device. By switching to the error mode, the controller prevents the depleted aerosol-generating article 200 from being re-heated and re-used.

Figure 5 is a schematic of a cross sectional view of a second aerosol-generating device 400. The aerosol-generating device 400 has many features in common with the first aerosol-generating device and like features are numbered accordingly.

Unlike the first aerosol-generating device 100 which comprises an inductive heater assembly, the heater assembly of the second aerosol-generating device 400 is a resistive heater assembly. The heater assembly comprises a resistive heater blade 402 which extends from the base 12 into the cavity 10. The resistive heater blade 402 comprises a heater element which is electrically connected to the power supply 142. There is a no need for a DC/AC converter in the second aerosol-generating device 400. When power is supplied to the heater blade 402 from the power supply 142, the heater blade 402 can increase in temperature.

An aerosol-generating article 500 is received in the cavity 10. The aerosol-generating article 500 contains an aerosol-forming substrate 502 which is a solid tobacco-containing substrate. In particular, the aerosol-forming substrate is a gathered sheet of homogenised tobacco. When the aerosol-forming article 500 is received in the cavity 10, the heater blade 402 penetrates the aerosol-forming substrate 502. A mouth end of the aerosol-generating article 400 protrudes out of the cavity 10 and out of the aerosol-generating device when the aerosol-generating article is received in the cavity. This mouth end forms a mouthpiece 504 on which a user of the aerosol-generating device may puff in use.

In use of the aerosol-generating device 400, a user will initially activate the device by pressing the button. Immediately following activation, the controller 140 is configured to perform the method shown in Figure 5.

At step 602 of the method, the controller is configured to begin supplying power to the heater blade 402 of the heater assembly.

The power is supplied as a direct current. In step 602, the controller is configured to supply power to heater assembly so that the heater assembly is operated in a low power mode. In the low power mode, substantial heating of the heater blade 402 is avoided. This is achieved by supplying power to the heater blade 402 as a series of successive pulses separated by time intervals. The pulses have length of about 1 millisecond and are separated by time intervals of about 250 milliseconds. During the time intervals, the power supplied to the heater blade 402 is interrupted. As the pulses are much shorter than the intervals between pulses, the temperature of the heater blade 402 will not substantially increase in the low power mode and so substantial generation of aerosol in the low power mode is avoided.

Step 604 is performed during step 602. Step 604 of the method comprises determining the rate of change of the resistance of the heater blade 402. Heater blade 402 is made of a material having a resistance that is dependent on temperature. As such, determining the rate of change of the resistance of the heater blade 402 provides a proxy for the rate of change of the temperature of the heater blade 402.

During the pulses in the low power mode, the controller is configured to probe and measure the resistance of the heater blade 402. The controller is configured to measure the resistance of the heater blade 402 by measuring the voltage and current of the power supplied to the heater blade 402 and dividing the voltage by the current.

The controller is able to determine the rate of change of the resistance by comparing the difference in resistance value during successive pulses and dividing by the time separation between those measurements. In this embodiment, the controller is configured to determine the rate of change of resistance over a period of 2 seconds.

At step 606 of the method, the controller is configured to compare the determined rate of change of the resistance of the heater blade 402 to a predetermined threshold stored in a memory of the controller. The predetermined threshold corresponds to a maximum expected rate of change of the resistance of the heater blade if a fresh aerosol-generating article 200 is received in the cavity 10 and if the heater blade 402 has not recently been heated.

The expected rate of change of the resistance of the heater blade 402 should be relatively low because the expected rate of change of the temperature of the heater blade should be low. This is because the initial temperature of both the heater blade 402 and the aerosol-generating article is expected to be at or close to ambient temperature. As such, the predetermined threshold corresponds to a rate of change of temperature of less than 0.25 degrees Celsius.

The rate of change of resistance of the heater blade 4023 will deviate from the expected rate if the aerosol-generating article has a temperature above ambient temperature because the aerosol-generating article will have a heating effect on the heater blade 402. This is indicative of a depleted aerosol-generating article.

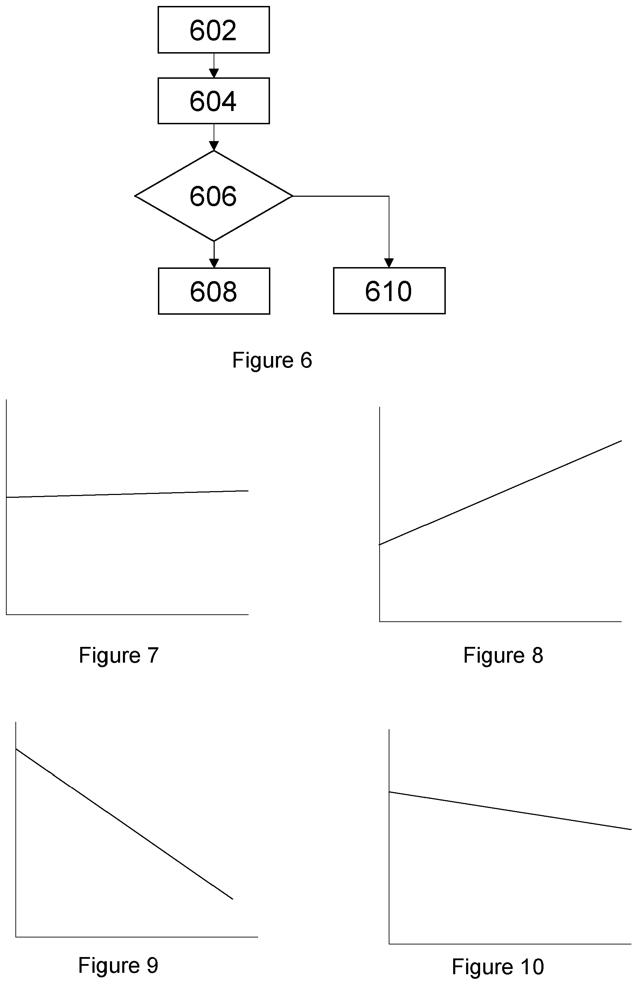

Figure 7 is a graph showing how the resistance of the heater blade 402 changes in time if a fresh aerosol-generating article is received in cavity. Figure 8 is a graph representing how the resistance of the heater blade 402 changes in time if a depleted aerosol-generating article having a temperature above ambient temperature is received in the cavity. Both Figures 7 and 8 show time on the x axis and resistance on the y axis. The time is over a relatively short length of 2 seconds.

Comparing the graph of Figure 7 to Figure 8, it is clear that slope of the graph is steeper when a depleted aerosol-generating article is received in the cavity 10. This is because of the heating effect of the depleted aerosol-generating article on the heater blade 402 causing an increase in temperature of the heater blade which, in turn, causes an increase in resistance.

If the controller determines that the magnitude rate of change of the resistance of the heater blade 402 is less than or equal to the predetermined threshold, the controller is configured to carry out step 608 of the method.

Step 608 of the method comprises switching from the low power mode to a high power mode. In the high power mode, power is supplied to the heater blade 402 such that significant heating of the heater blade 402 occurs. The power may either be supplied constantly or, if the power is supplied in pulses, the length of the pulses are substantially longer than the interval between the pulse. In the high power mode, a user can puff on the aerosol-generating device to inhale an aerosol. The high power mode can be considered a normal usage phase of the device. In some embodiments, the aerosol-generating device comprises a user interface to indicate to a user that the device is ready for puffing.

During the high power mode, a user will puff on the mouthpiece 504 of the received aerosol-generating article 500 resulting in air being drawn through the airflow channel 120 towards the user's mouth. During a puff, air will be drawn from outside of the aerosol-generating device into the airflow channel 120 through air inlet 122. The air will be drawn through the portions of the airflow channel defined by the airflow channel wall 124, through the air inlet defined in the base 12 of the cavity 10 and into the cavity. Because the aerosol-generating article 500 is received in the cavity, the air drawn into the cavity with enter the aerosol-generating article 500 at its distal end. Thus, the air passes through the aerosol-forming substrate 502. In doing so, any volatile compounds generated by the heating of the substrate 502 will become entrained in the air. As the air continues towards the mouth end of the aerosol-generating article 500, the volatile compounds cool to form an aerosol.

If the controller determines that the magnitude of the rate of change of the resistance of the heater blade exceeds the predetermined threshold, the controller is configured to carry out step 610 of the method.

Step 610 comprises switching from the low power mode to an error mode. In the error mode, the controller is configure to prevent the supply of power to the heater assembly and so prevent a user from continuing to use the aerosol-generating device. By switching to the error mode, the controller prevents the depleted aerosol-generating article from being re-heated and re-used.

In an alternative embodiment of the second aerosol-generating device, the predetermined threshold which is used in step 606 of the method corresponds to a minimum expected rate of change of the resistance of the heater blade if a fresh aerosol-generating article 200 is received in the cavity 10 and if the heater blade 402 has been heated recently. In this case, the expected rate of change of the resistance of the heater blade 402 should be relatively high because the starting heater of the heater blade 402, which has recently been heated, is significantly higher than ambient temperature. The heater blade 402 should cool over time. The cooling effect should be particularly pronounced when a fresh aerosol-generating article is received in the cavity 10 having a temperature that is significantly below the temperature of the heater blade 402.

The rate of change of conductance of the susceptor element 206 will deviate from the expected rate if the aerosol-generating article has a temperature above ambient temperature because the aerosol-generating article will have less of a cooling effect on the heater blade 402. This is indicative of a depleted aerosol-generating article.

Figure 9 is a graph showing how the resistance of the heater blade 402 changes in time if a fresh aerosol-generating article is received in cavity when the heater blade 402 has recently been heated. Figure 10 is a graph representing how the resistance of the heater blade 402 changes in time if a depleted aerosol-generating article having a temperature above ambient temperature is received in the cavity. Both Figures 9 and 10 show time on the x axis and resistance on the y axis. The time is over a relatively short length of 2 seconds.

Comparing the graph of Figure 9 to Figure 10, it is clear that slope of the graph is steeper when a fresh aerosol-generating article is received in the cavity 10. This is because of the cooling effect of the fresh aerosol-generating article on the heater blade 402 causing a decrease in temperature of the heater blade which, in turn, causes a decrease in resistance. In Figure 10, the aerosol-generating article has a higher starting temperature and so has less of a cooling effect on the heater blade 402.

If the controller determines that the magnitude rate of change of the resistance of the heater blade 402 is greater than or equal to the predetermined threshold, the controller is configured to carry out step 608 of the method.

If the controller determines that the magnitude rate of change of the resistance of the heater blade 402 is less than the predetermined threshold, the controller is configured to carry out step 610 of the method.

In a further embodiment of the second aerosol-generating article, step 604 of the method additionally comprises determining the resistance of the heater blade 402 and comparing the resistance to a threshold resistance value stored in a memory of the controller. The controller is configured to determine the resistance of the heater blade immediately after power is supplied to the heater blade 402 in step 602.

The threshold resistance is a resistance for the heater blade when the heater blade is at or close to ambient temperature. For example, the threshold resistance is a resistance for the heater blade 402 at 35 degrees Celsius. The purpose of the comparison of the determined resistance to a threshold resistance is to determine whether the heater blade 402 is initially close to ambient temperature or is initially hotter than ambient temperature. This is indicative of whether the second device 400 has been used recently or not.

If the determined resistance is less than equal to the threshold resistance, the controller is able to determine that the second aerosol-generating device 400 has not recently been used. In that case, the predetermined threshold for the rate of change of resistance that controller is configured to use in step 606 of the method corresponds to a maximum expected rate of change of the resistance of the heater blade if a fresh aerosol-generating article 200 is received in the cavity 10 and if the heater blade 402 has not recently been heated.

If the determined resistance is greater than the threshold resistance, the controller is able to determine that the second aerosol-generating device 400 has recently been used. In that case, the predetermined threshold for the rate of change of resistance that controller is configured to use in step 606 of the method corresponds to a minimum expected rate of change of the resistance of the heater blade if a fresh aerosol-generating article 200 is received in the cavity 10 and if the heater blade 402 has been heated recently.

By selecting the predetermined threshold used in step 606 of the method based on a detected resistance of the heater blade 402, the controller is able to adapt the method of

Figure 6 depending on the starting conditions of the heater blade 402. In effect, the previous two embodiments of the second aerosol-generating device 400 described above are combined.

## Claims

1. An aerosol-generating device (100) for generating an aerosol from an aerosol-generating article (200), the aerosol-generating device (100) comprising:
a cavity (10) for receiving an aerosol-generating article (200);
a heater assembly for heating the aerosol-generating article (200) received in the cavity (10); and
a power supply (142) configured to supply power to the heater assembly and controlled by a controller (140) to be operable in at least a low power mode in which aerosol is not generated and a high power mode in which aerosol can be generated;
wherein the controller (140) is configured to control the power supply (142) to operate in the low power mode initially and wherein, in the low power mode, the controller (140) is configured to measure a parameter related to a rate of change of a temperature of the heater assembly or a rate of change of a temperature of the aerosol-generating article (200) received in the cavity (10); and
wherein the controller (140) is configured to switch from the low power mode to the high power mode only if the measured parameter satisfies a predetermined criterion.

2. An aerosol-generating device (100) according to claim 1, wherein the controller (140) is configured to switch from the low power mode to an error mode if the measured parameter does not satisfy the predetermined criterion.

3. An aerosol-generating device (100) according to claim 1 or 2, wherein the predetermined criterion comprises a comparison of the magnitude of the measured parameter with a predetermined threshold.

4. An aerosol-generating device (100) according to claim 3, wherein the predetermined criterion is satisfied if the magnitude of the measured parameter is less than the predetermined threshold.

5. An aerosol-generating device (100) according to claim 3, wherein the predetermined criterion is satisfied if the magnitude of the measured parameter is greater than the predetermined threshold.

6. An aerosol-generating device (100) according to any one of the preceding claims, wherein the controller (140) is configured to control the power supply (142) to operate the heater assembly in the low power mode for a predetermined time following activation of the device (100) or following detection of an aerosol-generating article (200) received in the device (100).

7. An aerosol-generating device (100) according to claim 6, wherein the predetermined time is less than 3 seconds.

8. An aerosol-generating device (100) according to any one of the preceding claims, wherein the aerosol-generating device (100) is for use with an aerosol-generating article (200) comprising a susceptor element (206); wherein the heater assembly comprises an inductor coil (110); and wherein the power supply (142) is configured to provide an oscillating current to the inductor coil (110).

9. An aerosol-generating device (100) according to claim 8, wherein the measured parameter is the rate of change of the conductance of the susceptor element (206) of a received aerosol-generating article (200).

10. An aerosol-generating device (100 according to claim 9, wherein the predetermined criterion is satisfied if the rate of change of the conductance of the susceptor element (206) is less than a predetermined threshold.

11. An aerosol-generating device (100) according to any one of the preceding claims, wherein, in the low power mode, the controller (140) is configured to control the power supply (142) to supply a current with a duty cycle of less than 2 %.

12. An aerosol-generating device (100) according to any one of the claims 1 to 7, wherein the heater assembly comprises a heater element configured in use to heat the aerosol-generating article (200) received in the cavity (10) and wherein, during the low power mode, the controller (140) is configured to measure a parameter related to a rate of change of a temperature of the heater element.

13. An aerosol-generating system comprising the aerosol-generating device (100) according to any one of the preceding claims and an aerosol-generating article (200) comprising an aerosol-forming substrate (202).

14. An aerosol-generating system according to claim 13, wherein the aerosol-generating article (200) comprises a susceptor element (206).

15. A method of controlling a heater assembly of an aerosol-generating device (100), the heater assembly being for heating an aerosol-generating article (200) received in a cavity (10) of the aerosol-generating device (100) and operable in at least a low power mode in which aerosol is not generated and a high power mode in which aerosol can be generated, the method comprising:
controlling the power supplied to the heater assembly so that the heater assembly operates in the low power mode initially;
while operating the heater assembly in the low power mode, measuring a parameter related to a rate of change of a temperature of the heater assembly or a rate of change of a temperature of an aerosol-generating article (200) received in the cavity (10) of the aerosol-generating device (100); and
switching from the low power mode to the high power mode only if the measured parameter satisfies a predetermined criterion.

## Patentansprüche

1. Aerosolerzeugungsvorrichtung (100) für ein Erzeugen eines Aerosols aus einem aerosolerzeugenden Artikel (200), die Aerosolerzeugungsvorrichtung (100) aufweisend:
einen Hohlraum (10) für ein Aufnehmen eines aerosolerzeugenden Artikels (200);
eine Heizvorrichtungsbaugruppe für ein Erwärmen des in dem Hohlraum (10) aufgenommenen aerosolerzeugenden Artikels (200); und
eine Energieversorgung (142), ausgelegt für ein Versorgen der Heizvorrichtungsbaugruppe mit Energie und gesteuert von einer Steuerung (140), um in wenigstens einem Niedrigleistungsmodus, in dem kein Aerosol erzeugt wird, und einem Hochleistungsmodus, in dem Aerosol erzeugt werden kann, betreibbar zu sein;
wobei die Steuerung (140) ausgelegt ist, die Energieversorgung (142) zu steuern, um anfänglich in dem Niedrigleistungsmodus zu arbeiten, und wobei die Steuerung (140) in dem Niedrigleistungsmodus ausgelegt ist, einen Parameter zu messen, der mit einer Änderungsgeschwindigkeit einer Temperatur der Heizvorrichtungsbaugruppe oder einer Änderungsgeschwindigkeit einer Temperatur des in dem Hohlraum (10) aufgenommenen aerosolerzeugenden Artikels (200) in Bezug steht; und
wobei die Steuerung (140) ausgelegt ist, nur dann von dem Niedrigleistungsmodus in den Hochleistungsmodus zu wechseln, wenn der gemessene Parameter ein vorbestimmtes Kriterium erfüllt.

2. Aerosolerzeugungsvorrichtung (100) nach Anspruch 1, wobei die Steuerung (140) ausgelegt ist, von dem Niedrigleistungsmodus in einen Fehlermodus zu wechseln, wenn der gemessene Parameter das vorbestimmte Kriterium nicht erfüllt.

3. Aerosolerzeugungsvorrichtung (100) nach Anspruch 1 oder 2, wobei das vorbestimmte Kriterium einen Vergleich der Größe des gemessenen Parameters mit einem vorbestimmten Schwellenwert umfasst.

4. Aerosolerzeugungsvorrichtung (100) nach Anspruch 3, wobei das vorbestimmte Kriterium erfüllt ist, wenn die Größe des gemessenen Parameters kleiner als der vorbestimmten Schwellenwert ist.

5. Aerosolerzeugungsvorrichtung (100) nach Anspruch 3, wobei das vorbestimmte Kriterium erfüllt ist, wenn die Größe des gemessenen Parameters größer als der vorbestimmte Schwellenwert ist.

6. Aerosolerzeugungsvorrichtung (100) nach einem beliebigen der vorhergehenden Ansprüche, wobei die Steuerung (140) ausgelegt ist, die Energieversorgung (142) derart zu steuern, dass die Heizvorrichtungsbaugruppe nach Aktivierung der Vorrichtung (100) oder nach Erkennung eines in der Vorrichtung (100) aufgenommenen aerosolerzeugenden Artikels (200) für eine vorbestimmte Zeit in dem Niedrigleistungsmodus betrieben wird.

7. Aerosolerzeugungsvorrichtung (100) nach Anspruch 6, wobei die vorbestimmte Zeit weniger als 3 Sekunden beträgt.

8. Aerosolerzeugungsvorrichtung (100) nach einem beliebigen der vorhergehenden Ansprüche, wobei die Aerosolerzeugungsvorrichtung (100) für eine Verwendung mit einem aerosolerzeugenden Artikel (200), aufweisend ein Suszeptorelement (206), vorgesehen ist; wobei die Heizvorrichtungsbaugruppe eine Induktorspule (110) aufweist; und wobei die Energieversorgung (142) ausgelegt ist, der Induktorspule (110) einen Schwingstrom bereitzustellen.

9. Aerosolerzeugungsvorrichtung (100) nach Anspruch 8, wobei der gemessene Parameter die Änderungsgeschwindigkeit der Leitfähigkeit des Suszeptorelements (206) eines aufgenommenen aerosolerzeugenden Artikels (200) ist.

10. Aerosolerzeugungsvorrichtung (100) nach Anspruch 9, wobei das vorbestimmte Kriterium erfüllt ist, wenn die Änderungsgeschwindigkeit der Leitfähigkeit des Suszeptorelements (206) kleiner als ein vorbestimmter Schwellenwert ist.

11. Aerosolerzeugungsvorrichtung (100) nach einem beliebigen der vorhergehenden Ansprüche, wobei die Steuerung (140) in dem Niedrigleistungsmodus ausgelegt ist, die Energieversorgung (142) zu steuern, um einen Strom mit einem Tastverhältnis von weniger als 2 % bereitzustellen.

12. Aerosolerzeugungsvorrichtung (100) nach einem der Ansprüche 1 bis 7, wobei die Heizvorrichtungsbaugruppe ein Heizelement umfasst, das ausgelegt ist, in Gebrauch den in dem Hohlraum (10) aufgenommenen aerosolerzeugenden Artikel (200) zu erwärmen, und wobei die Steuerung (140) während des Niedrigleistungsmodus ausgelegt ist, einen Parameter zu messen, der mit einer Änderungsgeschwindigkeit einer Temperatur des Heizelements in Bezug steht.

13. Aerosolerzeugungssystem, umfassend die Aerosolerzeugungsvorrichtung (100) nach einem beliebigen der vorhergehenden Ansprüche und einen aerosolerzeugenden Artikel (200), aufweisend ein aerosolbildendes Substrat (202).

14. Aerosolerzeugungssystem nach Anspruch 13, wobei der aerosolerzeugende Artikel (200) ein Suszeptorelement (206) aufweist.

15. Verfahren für ein Steuern einer Heizvorrichtungsbaugruppe einer Aerosolerzeugungsvorrichtung (100), wobei die Heizvorrichtungsbaugruppe für ein Erwärmen eines aerosolerzeugenden Artikels (200) vorgesehen ist, der in einem Hohlraum (10) der Aerosolerzeugungsvorrichtung (100) aufgenommen ist und in wenigstens einem Niedrigleistungsmodus, in dem kein Aerosol erzeugt wird, und einem Hochleistungsmodus, in dem Aerosol erzeugt werden kann, betreibbar ist, das Verfahren umfassend:
Steuern der Energieversorgung der Heizvorrichtungsbaugruppe, sodass die Heizvorrichtungsbaugruppe anfänglich in dem Niedrigleistungsmodus arbeitet;
während des Betreibens der Heizvorrichtungsbaugruppe in dem Niedrigleistungsmodus, Messen eines Parameters, der mit einer Änderungsgeschwindigkeit einer Temperatur der Heizvorrichtungsbaugruppe oder einer Änderungsgeschwindigkeit einer Temperatur eines aerosolerzeugenden Artikels (200) in Bezug steht, der in dem Hohlraum (10) der Aerosolerzeugungsvorrichtung (100) aufgenommen ist; und
Wechseln von dem Niedrigleistungsmodus in den Hochleistungsmodus nur dann, wenn der gemessene Parameter ein vorbestimmtes Kriterium erfüllt.

## Revendications

1. Système de génération d'aérosol (100) pour la génération d'un aérosol à partir d'un article de génération d'aérosol (200), le dispositif de génération d'aérosol (100) comprenant :
une cavité (10) destinée à la réception d'un article de génération d'aérosol (200) ;
un ensemble de chauffage destiné à chauffer l'article de génération d'aérosol (200) reçu dans la cavité (10) ; et
une alimentation électrique (142) configurée pour alimenter en puissance l'ensemble de chauffage et commandée par un dispositif de commande (140) pour pouvoir être mis en fonctionnement dans au moins un mode basse puissance dans lequel l'aérosol n'est pas généré et un mode haute puissance dans lequel l'aérosol peut être généré ;
dans lequel le dispositif de commande (140) est configuré pour commander l'alimentation électrique (142) pour fonctionner dans le mode basse puissance initialement et dans lequel, dans le mode basse puissance, le dispositif de commande (140) est configuré pour mesurer un paramètre lié à un taux de changement d'une température de l'ensemble de chauffage ou à un taux de changement d'une température de l'article de génération d'aérosol (200) reçu dans la cavité (10) ; et
dans lequel le dispositif de commande (140) est configuré pour commuter du mode basse puissance au mode haute puissance uniquement si le paramètre mesuré satisfait un critère prédéterminé.

2. Dispositif de génération d'aérosol (100) selon la revendication 1, dans lequel le dispositif de commande (140) est configuré pour commuter du mode basse puissance à un mode d'erreur si le paramètre mesuré ne satisfait pas le critère prédéterminé.

3. Dispositif de génération d'aérosol (100) selon la revendication 1 ou 2, dans lequel le critère prédéterminé comprend une comparaison de l'amplitude du paramètre mesuré avec un seuil prédéterminé.

4. Dispositif de génération d'aérosol (100) selon la revendication 3, dans lequel le critère prédéterminé est satisfait si l'amplitude du paramètre mesuré est inférieure au seuil prédéterminé.

5. Dispositif de génération d'aérosol (100) selon la revendication 3, dans lequel le critère prédéterminé est satisfait si l'amplitude du paramètre mesuré est supérieure au seuil prédéterminé.

6. Dispositif de génération d'aérosol (100) selon l'une quelconque des revendications précédentes, dans lequel le dispositif de commande (140) est configuré pour commander l'alimentation électrique (142) pour faire fonctionner l'ensemble de chauffage dans le mode basse puissance pendant une durée prédéterminée après l'activation du dispositif (100) ou après la détection d'un article de génération d'aérosol (200) reçu dans le dispositif (100).

7. Dispositif de génération d'aérosol (100) selon la revendication 6, dans lequel la durée prédéterminée est inférieure à 3 secondes.

8. Dispositif de génération d'aérosol (100) selon l'une quelconque des revendications précédentes, dans lequel le dispositif de génération d'aérosol (100) est destiné à être utilisé avec un article de génération d'aérosol (200) comprenant un élément suscepteur (206) ; dans lequel l'ensemble de chauffage comprend une bobine d'induction (110) ; et dans lequel l'alimentation électrique (142) est configurée pour fournir un courant oscillant à la bobine d'induction (110).

9. Dispositif de génération d'aérosol (100) selon la revendication 8, dans lequel le paramètre mesuré est le taux de changement de la conductance de l'élément suscepteur (206) d'un article de génération d'aérosol (200) reçu.

10. Dispositif de génération d'aérosol (100) selon la revendication 9, dans lequel le critère prédéterminé est satisfait si le taux de changement de la conductance de l'élément suscepteur (206) est inférieur à un seuil prédéterminé.

11. Dispositif de génération d'aérosol (100) selon l'une quelconque des revendications précédentes, dans lequel, dans le mode basse puissance, le dispositif de commande (140) est configuré pour commander l'alimentation électrique (142) pour alimenter un courant avec un cycle opératoire inférieur à 2 %.

12. Dispositif de génération d'aérosol (100) selon l'une quelconque des revendications 1 à 7, dans lequel l'ensemble de chauffage comprend un élément de chauffage configuré, en utilisation, pour chauffer l'article de génération d'aérosol (200) reçu dans la cavité (10) et dans lequel, pendant le mode basse puissance, le dispositif de commande (140) est configuré pour mesurer un paramètre lié à un taux de changement d'une température de l'élément de chauffage.

13. Système de génération d'aérosol comprenant le dispositif de génération d'aérosol (100) selon l'une quelconque des revendications précédentes et un article de génération d'aérosol (200) comprenant un substrat formant aérosol (202).

14. Système de génération d'aérosol selon la revendication 13, dans lequel l'article de génération d'aérosol (200) comprend un élément suscepteur (206).

15. Procédé de commande d'un ensemble de chauffage d'un dispositif de génération d'aérosol (100), l'ensemble de chauffage étant destiné à chauffer un article de génération d'aérosol (200) reçu dans une cavité (10) du dispositif de génération d'aérosol (100) et pouvant fonctionner dans au moins un mode basse puissance dans lequel l'aérosol n'est pas généré et un mode haute puissance dans lequel l'aérosol peut être généré, le procédé comprenant :
la commande de la puissance alimentée vers l'ensemble de chauffage de telle sorte que l'ensemble de chauffage fonctionne dans le mode basse puissance initialement ;
lors du fonctionnement de l'ensemble de chauffage en mode basse puissance, la mesure d'un paramètre lié à un taux de changement d'une température de l'ensemble de chauffage ou à un taux de changement d'une température d'un article de génération d'aérosol (200) reçu dans la cavité (10) du dispositif de génération d'aérosol (100) ; et
la commutation du mode basse puissance au mode haute puissance uniquement si le paramètre mesuré satisfait un critère prédéterminé.
